(19) Europäisches Patentamt
European Patent Office
Office européen des brevets

(11) **EP 1 431 338 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(51) Int Cl.:
***C08K 3/36*** *(2006.01)*    ***C08L 83/04*** *(2006.01)*

(21) Anmeldenummer: **02028312.3**

(22) Anmeldetag: **17.12.2002**

(54) **Strukturgecoatete Kieselsäure**

Texture-coated silica

Silice enrobée texturée

(84) Benannte Vertragsstaaten:
**AT BE BG CH CY CZ DE DK EE ES FI FR GB GR IE IT LI LU MC NL PT SE SI SK TR**

(43) Veröffentlichungstag der Anmeldung:
**23.06.2004 Patentblatt 2004/26**

(73) Patentinhaber: **Evonik Degussa GmbH**
**45128 Essen (DE)**

(72) Erfinder:
• **Meyer, Jürgen Dr.**
**63811 Stockstadt (DE)**
• **Spitznagel, Kurt**
**63457 Hanau (DE)**
• **Christian, Hans-Dieter**
**63755 Alzenau (DE)**

(56) Entgegenhaltungen:
WO-A-93/08236    WO-A-95/31508
US-A- 2 870 108    US-A- 3 037 933
US-A- 5 034 207    US-A- 5 620 773
US-A- 5 665 803

**Beschreibung**

Die Erfindung betrifft eine strukturgecoatete Kieselsäure, ein Verfahren zu ihrer Herstellung sowie ihre Verwendung.

Aus der DE 24 14 478 ist eine aerogelartig strukturierte Kieselsäure bekannt. Diese Kieselsäure wird hergestellt, indem man in eine luftdispergierte pyrogene Kieselsäure Wasser unter gleichmäßiger Verteilung einarbeitet und die erhaltene pulverförmige Mischung trocknet.

Diese Kieselsäure weist den Nachteil auf, daß sie eine starke Sedimentationsneigung aufweist und nur schwer bis nicht redispergierbar ist.

Das Dokument DE 15 92 863 beschreibt organisch modifizierte Fällungskieselsäuren, die beispielsweise mit einem Wachs beschichtet sind und als Mattierungsmittel eingesetzt werden können.

Diese bekannten Kieselsäuren weisen eine schlechte Transparenz in verschiedenen Lacksystemen auf. Auf Grund des hohen Feuchtigkeitsgehaltes können diese Kieselsäuren nicht in feuchtigkeitshärtenden Polyurethan-Systemen eingesetzt werden. Schwermattierbare Lacksysteme, wie Polyurethan- und Epoxy-Lacksysteme, können mit den bekannten Kieselsäuren nicht zufriedenstellend mattiert werden.

Es besteht somit die Aufgabe eine Kieselsäure herzustellen, die diese Nachteile nicht aufweist.

Gegenstand der Erfindung ist eine strukturgecoatete Kieselsäure. Sie kann einen Kohlenstoffgehalt von 1 bis 30 Gew.-% aufweisen.

Die erfindungsgemäße Kieselsäure kann eine BET-Oberfläche von 80 bis 450 $m^2/g$ aufweisen. Sie kann eine Stampfdichte von 10 bis 100 g/l aufweisen. Die DBP-Zahl kann 2,4 bis 3,8 betragen.

Eine 4 %-ig wäßrige Aufschlämmung der erfindungsgemäßen Kieselsäure kann einen pH-Wert von 6 bis 8 aufweisen.

Strukturgecoatet bedeutet, daß das Endprodukt eine höhere Struktur als das Ausgangsprodukt aufweist und zusätzlich gecoated ist. Die strukturgecoatete Kieselsäure weist eine höhere DPB-Zahl als die Ausgangskieselsäure auf.

Die erfindungsgemäße strukturgecoatete Kieselsäure kann hergestellt werden, indem man eine pyrogene Kieselsäure in einem geeigneten Mischgefäß mit Wasser und einem Coatungsmittel unter Mischen besprüht, anschließend vermahlt und danach trocknet.

Als pyrogene Kieselsäure kann jede bekannte pyrogene Kieselsäure eingesetzt werden.

In einer bevorzugten Ausführungsform der Erfindung können die pyrogenen Kieselsäuren gemäß der Tabelle 1 eingesetzt werden.

Pyrogene Kieselsäure sind bekannt aus Ullmann's Encyklopädie der technischen Chemie 4. Auflage, Band 21, Seiten 464 ff (1982). Sie werden hergestellt mittels der Flammenhydrolyse, bei der eine verdampfbare Metall- beziehungsweise Metalloidverbindung, wie zum Beispiel Siliciumtetrachlorid, mit Wasserstoff und Sauerstoff enthaltenden Gasen in einer Flamme verbrannt werden.

Tabelle 1

| Physikalisch Chemische Daten von AEROSIL | | | | | | | | | |
|---|---|---|---|---|---|---|---|---|---|
| **Prüfmethode** | | **AEROSIL 90** | **AEROSIL 130** | **AEROSIL 150** | **AEROSIL 200** | **AEROSIL 300** | **AEROSIL 380** | **AEROSIL OX 50** | **AEROSIL TT 600** |
| **Verhalten gegenüber Wasser** | | hydrophil | | | | | | | |
| **Aussehen** | | lockeres weißes Pulver | | | | | | | |
| **Oberfläche nach BET[1)]** | m$^2$/g | $90 \pm 15$ | $130 \pm 25$ | $150 \pm 15$ | $200 \pm 25$ | $300 \pm 30$ | $380 \pm 30$ | $50 \pm 15$ | $200 \pm 50$ |
| **Mittlere Größe der Primärteilchen** | nm | 20 | 16 | 14 | 12 | 7 | 7 | 40 | 40 |
| **Stampfdichte** ca.-Wert[2)] | g/l | 80 | 50 | 50 | 50 | 50 | 50 | 130 | 60 |
| verdichtete Ware (Zusatz "V") VV-Ware | g/l | 120 | 120 | 120 | 120 | 120 | 120 | | |
| (Zusatz "VV")[12)] | g/l g/l | | | 50/75 | 50/75 120 | 50/75 120 | | | |
| Trockungsverlust[3)] (2 Stunden bei 105 °C) bei Verlassen d. Lieferwerkes | % | <1,0 | <1,5 | <0,5[9)] | <1,5 | <1,5 | <2,0 | <1,5 | <2,5 |
| Glühverlust [4) 7)] (2 Stunden bei 1000°C) | % | <1 | <1 | <1 | <1 | <2 | <2,5 | <1 | <2,5 |
| pH-wert[5)] | | 3,7-4,7 | 3,7-4,7 | 3,7-4,7 | 3,7-4,7 | 3,7-4,7 | 3,7-4,7 | 3,8-4,8 | 3,6-4,5 |
| $SiO_2$[8)] | % | >99,8 | >99,8 | >99,8 | >99,8 | >99,8 | >99,8 | >99,8 | >99,8 |
| $Al_2O_3$[8)] | % | <0,05 | <0,05 | <0,05 | <0,05 | <0,05 | <0,05 | <0,08 | <0,05 |
| $Fe_2O_3$[8)] | % | <0,003 | <0,003 | <0,003 | <0,003 | <0,003 | <0,003 | <0,01 | <0,003 |
| $TiO_2$[8)] | % | <0,03 | <0,03 | <0,03 | <0,03 | <0,03 | <0,03 | <0,03 | <0,03 |
| HCl[8) 10)] | % | <0,025 | <0,025 | <0,025 | <0,025 | <0,025 | <0,025 | <0,025 | <0,025 |
| Siebrückstand[8)] (nach Mocker, 45 $\mu$m) | % | <0,05 | <0,05 | <0,05 | <0,05 | <0,05 | <0,05 | <0,2 | <0,05 |

(fortgesetzt)

| Physikalisch Chemische Daten von AEROSIL | | | | | | | | | |
|---|---|---|---|---|---|---|---|---|---|
| **Prüfmethode** | | **AEROSIL 90** | **AEROSIL 130** | **AEROSIL 150** | **AEROSIL 200** | **AEROSIL 300** | **AEROSIL 380** | **AEROSIL OX 50** | **AEROSIL TT 600** |
| Gebindegröße (netto)[11] | kg | 10 | 10 | 10 | 10 | 10 | 10 | 10 | 10 |
| 1) in Anlehnung an DIN 66131<br>2) in Anlehnung an DIN ISO 787/XI, JIS K 5101/18 (nicht gesiebt)<br>3) in Anlehnung an DIN ISO 787/II, ASTM D 280. JIS K 5101/21<br>4) in Anlehnung an DIN 55921, ASTM D 1208, JIS K 5101/23<br>5) in Anlehnung an DIN ISO 787/IX, ASTM D 1208, JIS K 5101/24<br>6) in Anlehnung an DIN ISO 787/XVIII, JIS K 5101/20<br>7) bezogen auf die 2 Stunden bei 105 °C getrocknete Substanz<br>8) bezogen auf die 2 Stunden bei 1000 °C geglühte Substanz<br>9) spezielle vor Feuchtigkeit schützende Verpackung<br>10) HCI-Gehalt ist Bestandteil des Glühverlustes<br>11) V-Ware wird in Säcken zu 20 kg geliefert<br>12) W-Ware wird zur Zeit ausschließlich vom Werk Rheinfelden geliefert | | | | | | | | | |

Von den in der Tabelle 1 aufgeführten pyrogenen Kieselsäuren können bevorzugt alle Aerosil-Typen mit Ausnahme von AEROSIL OX50 auch die unverdichteten Varianten eingesetzt werden.

Als Coatungsmittel können in Form von wäßrigen Dispersionen oder Emulsionen Wachse und/oder organisch modifizierte Polysiloxanen eingesetzt werden.

Erfindungsgemäß verwendbare wäßrige Dispersionen oder Emulsionen von Wachsen können die folgenden Wachse enthalten:

- Polyethylen- Homo- und Copolymerwachse; Zahlenmittleres Molekulargewicht 700 - 10.000 g/Mol, mit einem Tropfpunkt von 80 - 140 °C.

- PTFE-Wachse; Polytetrafluoroethylen mit einem Molekulargewicht zwischen 30.000 und 2.000.000 g/Mol, insbesondere zwischen 100.000 und 1.000.000 g/Mol.

- Polypropylen- Homo- und Copolymerwachse; Zahlenmittleres Molekulargewicht 700 - 10.000 g/Mol, mit einem Tropfpunkt von 80 - 160 °C.

- Amidwachse; hergestellt durch Umsetzung von Ammoniak oder Ethylendiamin mit gesättigten und ungesättigten Fettsäuren. Bei den Fettsäuren handelt es sich zum Beispiel um Stearinsäure, Talgfettsäure, Palmitinsäure oder Erucasäure.

- FT-Paraffine; Zahlenmittleres Molekulargewicht 400 - 800 g/Mol, mit einem Tropfpunkt von 80 - 125 °C.

- Montanwachse einschließlich Säure- und Esteerwachsen mit einer Kohlenstoffkettenlänge der Carbonsäure von $C_{22}$ - $C_{36}$. Bei den Esterwachsen handelt es sich um Umsetzungsprodukte der Montansäuren mit ein oder mehrwertigen Alkoholen, wie zum Beispiel Ethandiol, Butan-1,3-diol oder Propan-1,2,3-triol.

- Natürliche Wachse, wie zum Beispiel Carnaubawachs oder Candelillawachs.

- Marko- oder mikrokristalline Paraffine, welche bei der Erdölraffination anfallen. Die Tropfpunkte der Paraffine liegen zwischen 45 - 65 °C, die der mikrokristallinen Wachse zwischen 73 - 100 °C.

- Sorbitanester von Montanalkoholen.

Weiterhin können verwendet werden:

- Ein mittels Ziegler-Metallkatalyse hergestelltes Homo- oder Copolymerisat von $C_2$-$C_{18}$-$\alpha$-Olefinen, sowie als Hilfsstoffe ein oder mehrere andere Wachse, ausgewählt aus der Gruppe:

  - PE-Wachsen,

  - PTFE-Wachsen,

  - PP-Wachsen,

  - Amidwachsen,

  - FT-Paraffinen,

  - Montanwachsen,

  - natürliche Wachsen,

  - makro- und mikrokristallinen Paraffinen,

  - polare Polyolefinwachse oder

  - Sorbitanestern

Das mittels Ziegler-Metallocenkatalyse hergestellte Homo- oder Copolymerisat von $C_2$-$C_{18}$-$\alpha$-Olefinen hat vorzugsweise folgende Eigenschaften:

Tropfpunkt (Tp): 80 - 165 °C 90 - 155 °C
Säurezahl (SZ): 0 - 50 mg KOH/g
Dichte: 0,87 - 1,03 g/cm$^3$
Viskosität der Schmelze bei 170 °C: 10 - 100.000 mPas

Als Polyolefinwachse kommen Homopolymerisate des Ethylens oder Propylens oder Copolymerisate des Ethylens oder Propylens untereinander, oder mit einem oder mehreren 1-Olefinen in Frage.

Erfindungsgemäß verwendbare Polysiloxane können sein:

Öl-in-Wasser-Emulsion von

- organisch modifizierten Polysiloxanen (organische Modifizierung: $C_2$ bis $C_8$-Alkohole und EO/PO-Polyether)

- ungefähres mittleres Mw: 1000 bis 5000 g/mol

- (gefüllt mit hydrophober Kieselsäure) Wirkstoffgehalt der Emulsion: ca. 20 %

Da das Volumen der Kieselsäure bei der Einarbeitung des Wassers und des Coatungsmittels nur geringfügig abnimmt, ist anzunehmen, daß die ursprünglich vorhandene Assoziation der Primärteilchen der luftdispergierten pyrogenen Kieselsäure im wesentlichen erhalten bleibt. Durch die Beladung mit Wasser und des Coatungsmittels kommt es wahrscheinlich zu einer Anlösung der Kieselsäureoberfläche, so daß hier gelöste Kieselsäure vorliegt. Diese verkittet beim nachfolgenden Trocknen die Primärteilchen an deren Berührungsstellen.

Es entsteht also durch gezieltes Beladen mit Wasser und dem Coatungsmittel und anschließendes Trocknen aus einer pyrogenen Kieselsäure eine den Kistler'schen Aerogelen entsprechende dispergierstabile Substanz mit hohem Makroporenvolumen und sehr geringer scheinbarer Dichte (Schüttgewicht).

Es wurde weiterhin festgestellt, daß die vor der Einarbeitung des Wassers und des Coatungsmittels vorliegende scheinbare, durch die Packungsdichte der pyrogenen Kieselsäure in Luft bestimmte Struktur, welche durch ihre scheinbare Dichte (Schüttgewicht) zum Ausdruck kommt, einen deutlichen Einfluß auf das nach dem erfindungsgemäßen Prozeß zugängliche Produkt hat: Je voluminöser das Ausgangsprodukt ist, desto voluminöser fällt das Endprodukt aus.

Als zweckmäßig hat sich erwiesen, daß man zur Herstellung der erfindungsgemäßen Produkte pyrogene Kieselsäure mit einer Stampfdichte von 10 bis 130, vorzugsweise 15 bis 80, insbesondere um 20 g/l, einsetzt.

Darüber hinaus erweist es sich als vorteilhaft, pyrogene Kieselsäure mit großer Oberfläche und damit kleinen Primärteilchen zu wählen. Nach einer günstigen Ausführungsform des erfindungsgemäßen Verfahrens setzt man Kieselsäure mit BET-Oberflächen zwischen 100 und 480, insbesondere 250 bis 410 m$^2$/g ein.

Eine vollständige Benetzung der Primärteilchen kann bereits erzielt werden, wenn man 5 bis 20, insbesondere 7 bis 15 Gew.-% Wasser und das Coatungsmittel unter gleichmäßiger Verteilung in die Kieselsäure einarbeitet. Da das eingearbeitete Wasser wieder wegzutrocknen ist, wird aus wirtschaftlichen Gründen eine möglichst geringe Wassermenge angestrebt. Die erforderliche Menge hängt jedoch in gewissem Umfang von der Art der Einarbeitung ab.

Der Strukturaufbau gemäß dem erfindungsgemäßen Verfahren kann merklich gefördert werden, wenn man dem Wasser umd dem Coatungsmittel basisch reagierende Verbindungen, wie zum Beispiel Ammoniak, Natrium-, Kaliumhydroxid, wasserlösliche Amine, Wasserglas o.ä. zusetzt. Die Zusatzmengen werden dabei zweckmäßigerweise so gewählt, daß sich im Wasser ein pH-Wert von 7 bis 14, vorzugsweise 8 bis 12, insbesondere 10 bis 11, einstellt.

Die eingesetzten Alkalien wirken als Lösungsvermittler für Kieselsäure und bewirken eine Erhöhung der Makroporosität der Verfahrensprodukte.

Anstelle alkalischer Verbindungen können dem Wasser und dem Coatungsmittel auch freie Kieselsäure oder hydrolytische Kieselsäure und/oder Alkali freisetzende Substanzen zugesetzt werden.

Freie, zum Beispiel durch Ansäuern oder Ionenaustausch von Silikatlösungen oder durch hydrolytische Spaltung Siliciumorganischer Verbindungen, zum Beispiel von Tetramethylsilikat, erzeugte Kieselsäure fördert nämlich den Strukturaufbau ebenfalls. Eine hydrolytisch Alkali und Kieselsäure freisetzende Substanz ist zum Beispiel Natriummethylsilikonat.

Die gleichmäßige Verteilung des Wassers und des Coatungsmittels in der Kieselsäure kann durch Eintropfen oder Einsprühen in die mischend bewegte Kieselsäure bei Temperaturen der Kieselsäure zwischen 20 und 100, vorzugsweise 40 bis 70, insbesondere 50 bis 60 °C, vorgenommen werden. Die mischende Bewegung erfolgt zweckmäßigerweise durch Rühren.

Eine weitere Variante der Wassereinbringung besteht darin, daß man das Wasser und das Coatungsmittel in einen fluidisierten Massenstrom, zum Beispiel mit einem Fallrohr, der Kieselsäure einsprüht.

Es hat sich ferner als vorteilhaft erwiesen, die Wasserbeladung bei mäßig erhöhten Temperaturen durchzuführen. Dies kann geschehen, indem man entweder das einzuarbeitende Wasser mit dem Coatungsmittel oder die Kieselsäure oder beide Komponenten vorerwärmt. So kann das einzuarbeitende Wasser mit dem Coatungsmittel eine Temperatur zwischen 20 und 100, vorzugsweise 50 bis 100, insbesondere 90 bis 100 °C aufweisen.

Man kann den Strukturaufbau auch durch kurzzeitige Dämpfung der beladenen Kieselsäure im abgeschlossenen Raum fördern. Das Dämpfen führt zu einer besonders guten Wasserverteilung. Dabei hat sich als günstig erwiesen, die wasserbeladene Kieselsäure vor der Trocknung im abgeschlossenen Gefäß ca. 5 bis 60, vorzugsweise 10 bis 30, insbesondere um 20 Minuten, bei Temperaturen bis zum Siedepunkt des Wassers, vorzugsweise 50 bis 80, insbesondere um 60 °C, zu dämpfen.

Eine weitere Möglichkeit zur Verbesserung der Verteilung des Wassers und des Coatungsmittels besteht darin, daß man die mit Wasser und Coatungsmittel beladene Kieselsäure beispielsweise auf Stift- oder Luftstrahlmühlen, vermahlt.

Es wird dann getrocknet, wobei vermutlich die präformierte Struktur über die oberflächig angelösten beziehungsweise oberflächig mit freier Kieselsäure belegten Primärteilchen fixiert wird.

Die Art der Trocknung ist wenig kritisch.

Man kann die hergestellte Mischung von Kieselsäure und Wasser und Coatungsmittel, welche phänomenologisch stets einem trockenen Pulver gleicht, zum Beispiel im Horden-, Teller-, Büttner-, Strömungs- oder Mikrowellentrockner trocknen. Die mit Wasser und Coatungsmittel beladene Kieselsäure kann aber auch unter Einsparung einer getrennten Verfahrensstufe in einer Dampf- oder Luftstrahlmühle gleichzeitig vermahlen und getrocknet werden.

Sofern eine separate Trocknung der nach Beladung mit Wasser und Coatungsmittel erhaltenen pulverförmigen Mischung durchgeführt wird, kann man eine Trockenvermahlung auf einer Stift- oder Luftstrahlmühle anschließen.

Die erfindungsgemäße Kieselsäure kann als Mattierungsmittel in Lacken eingesetzt werden. Sie weist dabei die folgenden Vorteile auf:

- keine Sedimentation, beziehungsweise leichte Redispergierbarkeit,

- keine Beeinträchtigung der Mattierungseffizienz,

- Verbesserung der Haptik,

- Ermöglichen höher transparente Klarlacke,

- Niedrige Feuchtigkeitsgehalte, daher in feuchtigkeitshärtenden PU-Systemen (Polyurethan-Systemen) einsetzbar,

- Rheologie besser, da weniger thixotrop.

Insbesondere kann die erfindungsgemäße Kieselsäure in Polyurethan-Lacken eingesetzt werden.

**Beispiele**

Herstellung der erfindungsgemäßen strukturgecoatete Kieselsäure

Eingesetzt wird die hydrophile pyrogene Kieselsäure (Aerosil 300) mit folgenden physikalisch-chemischen Eigenschaften:

| | |
|---|---|
| Spezifische Oberfläche nach BET [$m^2$/g]: | 290,0 |
| pH-Wert: | 4,2 |
| Stampfdichte [g/l]: | 35 |
| Trocknungsverlust [%]: | 0,8 |
| DBP-Zahl [%]: | 305,0 |
| C-Gehalt [%]: | 0 |

Als Mischgefäß wird ein Pflugscharmischer verwendet. Das Coatungsmittel wird bei Raumtemperatur mit einer Zweistoffdüse aufgesprüht.

Als Coatungsmittel werden die folgenden Produkte eingesetzt:

Coatungsmittel A:

Das Coatungsmittel A ist bekannt aus EP 0 341 383 A2. Es ist eine Wachsemulsion und wird wie folgt hergestellt:

Die Herstellung der Wachsemulsion erfolgt in einem mit Dampf beheizbaren und mit einem Dispergator ausgerüsteten Autoklaven.

In diesem werden zunächst bei 100 °C 4,8 Gew.-Teile eines Alkylpolyglycolethers (Marlowet® GFW) in 81,0 Gew.-Teilen Wasser bei ca. 100 °C gelöst.

Anschließend werden 14,2 Gew.-Teile Niederdruck-Polyethylenwachs zugegeben und auf 130 °C erhitzt. Bei Erreichen von 130 °C wird der Dispergator eingeschaltet und 30 Minuten dispertiert.

Während dieser Zeit wird die Temperatur zwischen 130 und 140 °C gehalten. Nach Abstellen des Dispergators und Abkühlen auf rund 110 °C wird die fertige Emulsion abgelassen.

Das verwendete Polyethylenwachs wird durch folgende Kennzahlen charakterisiert:

| | |
|---|---|
| mittleres Molekulargewicht | 1000 |
| Erstarrungspunkt | 100 - 104 °C |
| Tropfpunkt | 110 - 117 °C |
| Dichte (g/cm$^3$) | 0,93 |

Die Emulsion wird danach auf den gewünschten pH-Wert eingestellt.

Coatungsmittel B

Das Coatungsmittel B ist bekannt aus EP 0 341 383 A2. Es ist eine Wachsemulsion und wird wie folgt hergestellt:

Die Herstellung der Wachsemulsion erfolgt in einem mit Dampf beheizbaren und mit einem Dispergator ausgerüsteten Autoklaven.

In diesem werden zunächst bei 100 °C 4,8 Gew.-Teile eines Alkylpolyglycolethers (Marlowet® GFW) in 81,0 Gew.-Teilen Wasser bei ca. 100 °C gelöst.

Anschließend werden 14,2 Gew.-Teile Niederdruck-Polyethylenwachs zugegeben und auf 130 °C erhitzt. Bei Erreichen von 130 °C wird der Dispergator eingeschaltet und 30 Minuten dispertiert. Während dieser Zeit wird die Temperatur zwischen 130 und 140 °C gehalten. Nach Abstellen des Dispergators und Abkühlen auf rund 110 °C wird die fertige Emulsion abgelassen.

Das verwendete Polyethylenwachs wird durch folgende Kennzahlen charakterisiert:

| | |
|---|---|
| mittleres Molekulargewicht | 2700 |
| Erstarrungspunkt | 92 - 96 °C |
| Tropfpunkt | 102 - 110 °C |
| Dichte (g/cm$^3$) | 0,92 |

Die Emulsion wird danach auf den gewünschten pH-Wert eingestellt.

Coatungsmittel C

Das Coatungsmittel C besteht aus 656,4 g einer wässrigen Polysioxan-Emulsion, die mit 210 g Wasser verdünnt und auf den gewünschten pH-Wert eingestellt wird.

Die Polysiloxan-Emulsion weist die folgenden physikalisch-chemischen Eigenschaften auf:

| | |
|---|---|
| Form: | zähflüssig |
| Farbe: | weiß |
| Geruch: | schwacher Eigengeruch |
| Siedetemperatur: | ca. 100 °C |
| Dichte: | ca. 1 g/cm$^3$ bei 20 °C |
| Wasserlöslichkeit: | mischbar |
| PH-Wert: | 5,5 |

(fortgesetzt)

| | bei 20 °C im Original |
|---|---|
| Viskosität, dynamisch: | ca. 2.300 mPa.s bei 25 °C |

Coatungsmittel D

Das Coatungsmittel D besteht aus 503,0 g einer wässrigen Alkylester-Polydimethylsiloxan-Emulsion, die mit 116 g Wasser verdünnt und auf den gewünschten pH-Wert eingestellt wird.
Die Alkylester-Polydimethylsiloxan-Emulsion weist folgende physikalisch-chemische Eigenschaften auf:

| Form: Farbe: Geruch: | zähflüssig weiß schwacher Eigengeruch |
|---|---|
| Siedetemperatur: | ca. 100 °C |
| Dichte: | ca. 0,95 g/cm$^3$ bei 25 °C |
| Wasserlöslichkeit: | mischbar |
| PH-Wert: | 5,8 bei 25 °C im Original |
| Viskosität, kinematisch: | ca. 40 - 120 mm$^2$/s bei 20 °C Methode: 4 DIN 53211 |

Coatungsmittel E

Das Coatungsmittel E besteht aus 365,6 g einer wässrigen Emulsion aus Esterwachs und Canauba-Wachs und 346 g Wasser. Die Mischung wird auf den pH-Wert 10,6 eingestellt.
Die Emulsion aus Esterwachs, Carnaubawachs, Emulgator und Wasser weist folgende Zusammensetzung auf:

| Komponenten: | %-Bereich | CAS-Nr. |
|---|---|---|
| Carnaubawachs | 15 - 25 % | 8015-86-9 |
| Esterwachs | 15 - 25 % | 73138-45-1 |
| Emulgator | 5 - 10 % | 68920-66-1 |
| Wasser | 40 - 50 % | 7732-18-5 |

Die eingesetzte Emulsion weist die folgenden physikalisch-chemischen Eigenschaften auf:

| Aussehen: Farbe: | Flüssigkeit hell-gelblich bis leicht bräunlich |
|---|---|
| Geruch: | mild |
| Siedepunkt: | 100 °C Siedebeginn |
| Schmelzpunkt: | 0 °C, wie Wasser (Feststoff ca. 86 °C |
| Relative Dichte (Wasser = 1): | 1,01 - 1,02 g/ml bei 20 °C |
| Dampfdruck: | 23 mbar (bei 20 °C), gleich wie Wasser |
| pH-Wert: | 5,0 - 5,6 |

(fortgesetzt)

| Wasserlöslichkeit: | in jedem Verhältnis mischbar |
|---|---|

Vergleichsbeispiel:

Zum Vergleich wurde bei Beispiel 8 anstelle von Coatungsmittel nur Wasser (alkalisch eingestellt) eingesetzt.

Tabelle 2

| Herstellung des befeuchteten Materials | | | | | | |
|---|---|---|---|---|---|---|
| Bezeichnung | Menge Kieselsäure [kg] | Coatungsmittel | Menge des Coatungsmittels [kg] | pH-Wert des Coatungsmittels | ph-Wert Einstellung durch Zusatz von | Trocknungsverlust des befeuchteten Materials |
| 1 | 2 | A | 0,938 | 10,5 | NaOH | 27,6 |
| 2 | 2 | B | 0,995 | 10,5 | $NH_4OH$ | 27,4 |
| 3 | 2 | C | 0,865 | 11,3 | $NH_4OH$ | 24,4 |
| 4 | 2 | C | 1,110 | 11,2 | Wasserglas | 27,4 |
| 5 | 2 | D | 0,634 | 9,8 | Wasserglas | 14,3 |
| 6 | 2 | D | 1,593 | 10,8 | NaOH | 21,4 |
| 7 | 2 | E | 0,711 | 10,6 | $NH_4OH$ | 14,6 |
| 8 | 2 | ohne Vergleichs beispiele | 0,765 | 11,5 | $NR_4OH$ | 27,8 |

Tabelle 3

| Vermahlung und Trocknung des befeuchteten Materials | | | | |
|---|---|---|---|---|
| Bezeichnung | Mahlaggregat | Durchsatz bei Vermahlung [kg/h] | Trocknungstemperatur [°C] | Trocknungsdauer [h] |
| 1 | Stiftmühle | 5 | 120 | 15 |
| 2 | Gasstrahlmühle | 7 | 120 | 15 |
| 3 | Gasstrahlmühle | 7 | 120 | 13 |
| 4 | Gasstrahlmühle | 7 | 120 | 12 |
| 5 | Stiftmühle | 5 | 120 | 12 |
| 6 | Stiftmühle | 5 | 120 | 15 |
| 7 | Stiftmühle | 5 | 120 | 10 |
| 8 | Gasstrahlmühle | 7 | 120 | 11 |

Tabelle 4

| Physikalisch-chemische Daten | | | | | | | |
|---|---|---|---|---|---|---|---|
| Bezeichrung | TV [%] | GV [%] | pH | DBP [%] | SD [g/l] | C [%] | eingesetztes Coatungsmittel |
| 1 | 0,8 | 7,8 | 6,4 | 338 | 26 | 4,1 | A |
| 2 | 2,5 | 7,4 | 6,3 | 321 | 29 | 4,3 | B |
| 3 | 1,6 | 4,9 | 6,5 | 326 | 24 | 3,0 | C |
| 4 | 1,6 | 6,1 | 6,9 | 301 | 25 | 4,4 | C |
| 5 | 0,8 | 9,4 | 6,3 | 331 | 23 | 6,5 | D |
| 6 | 2,0 | 19,4 | 7,2 | n.b. | 46 | 16,0 | D |
| 7 | 2,7 | 8,6 | 7,4 | 313 | 26 | 5,0 | E |
| 8 | 2,3 | 1,6 | 6,9 | 326 | 22 | 0 | ohne Vergleichsbeispiel |

**Bestimmung der physikalisch-chemischen Kenndaten**

**BET-Oberfläche**

Die BET-Oberfläche wird gemäß DIN 66 131 mit Stickstoff bestimmt.

**Stampfdichte**

Bestimmung der Stampfdichte in Anlehnung an DIN ISO 787/XI

Grundlagen der Stampfdichtebestimmung

Die Stampfdichte (früher Stampfvolumen) ist gleich dem Quotienten aus der Masse und dem Volumen eines Pulvers nach dem Stampfen im Stampfvolumeter unter festgelegten Bedingungen. Nach DIN ISO 787/XI wird die Stampfdichte in $g/cm^3$ angegeben. Wegen der sehr niedrigen Stampfdichte der Oxide wird jedoch von uns der Wert in g/l angegeben. Ferner wird auf die Trocknung und Siebung sowie auf die Wiederholung des Stampfvorganges verzichtet.

Geräte zur Stampfdichtebestimmung

Stampfvolumeter
Meßzylinder
Laborwaage (Ablesbarkeit 0.01 g)

Durchführung der Stampfdichtebestimmung

200 $\pm$ 10 ml Oxid werden in den Meßzylinder des Stampfvolumeters so eingefüllt, daß keine Hohlräume verbleiben und die Oberfläche waagerecht ist.
Die Masse der eingefüllten Probe wird auf 0,01 g genau bestimmt. Der Meßzylinder mit der Probe wird in den Meßzylinderhalter des Stampfvolumeters eingesetzt und 1250 mal gestampft.
Das Volumen des gestampften Oxids wird auf 1 ml genau abgelesen.

Auswertung der Stampfdichtebestimmung

$$\text{Stampfdichte (g/l)} = \frac{\text{g Einwaage x 1000}}{\text{ml abgelesenes Volumen}}$$

**pH-Wert**

Der pH-Wert wird in 4 %iger wäßriger Dispersion bestimmt, bei hydrophoben Oxiden in Wasser: Methanol 1:1.

Reagenzien zur pH-Wert-Bestimmung

destilliertes oder vollentsalztes Wasser, pH > 5.5
Methanol, p.a.
Pufferlösungen pH 7.00 pH 4.66

Geräte zur pH-Wert-Bestimmung

Laborwaage, (Ablesbarkeit 0,1 g)
Becherglas, 250 ml
Magnetrührer
Magnetstab, Länge 4 cm
kombinierte pH-Elektrode
pH-Meßgerät
Dispensette, 100 ml

Arbeitsvorschrift zur Bestimmung des pH-Wertes

Die Bestimmung erfolgt in Anlehnung an DIN/ISO 787/IX:
Eichung:Vor der pH-Wertmessung wird das Meßgerät mit den Pufferlösungen geeicht. Werden mehrere Messungen hintereinander durchgeführt, genügt eine einmalige Eichung.
4 g hydrophiles Oxid werden in einem 250 ml Becherglas mit 96 g (96ml) Wasser unter Zuhilfenahme einer Dispensette und fünf Minuten bei eingetauchter pH-Elektrode mit einem Magnetrührer gerührt (Drehzahl ca. 1000 min$^{-1}$).
4 g hydrophobes Oxid werden in einem 250 ml Becherglas mit 48 g (61 ml) Methanol angeteigt und die Suspension mit 48 g (48 ml) Wasser verdünnt und fünf Minuten bei eingetauchter pH-Elektrode mit einem Magnetrührer gerührt
(Drehzahl ca. 1000 min$^{-1}$).
Nach Abstellen des Rührers wird der pH-Wert nach einer Standzeit von einer Minute abgelesen. Das Ergebnis wird mit einer Dezimale ausgewiesen.

**Trocknungsverlust**

Im Gegensatz zur in der DIN ISO 787 II genannten Einwaage von 10 g wird für die Trocknungsverlust-Bestimmung eine 1 g-Einwaage verwendet.
Der Deckel wird vor dem Abkühlen aufgesetzt. Eine zweite Trocknung wird nicht vorgenommen.
Ca. 1 g der Probe wird unter Vermeidung von Staubentwicklung in ein bei 105 °C getrocknetes Wägeschälchen mit Schliffdeckel auf 0,1 mg genau eingewogen und zwei Stunden im Trockenschrank bei 105 °C getrocknet. Nach dem Erkalten bei aufgesetztem Deckel im Exsikkator über Blaugel wird zurückgewogen.

$$\% \text{ Trocknungsverlust bei 105 °C} = \frac{\text{g Gewichtsverlust}}{\text{g Einwaage}} \times 100$$

Das Ergebnis wird mit einer Dezimale ausgewiesen.

**Glühverlust**

Geräte zur Bestimmung des Glühverlustes

Porzellantiegel mit Tiegeldeckel
Muffelofen
Analysenwaage (Ablesbarkeit 0.1 mg)
Exsikkator

Durchführung der Glühverlustbestimmung

Abweichend von DIN 55 921 werden 0.3 - 1 g der nicht vorgetrockneten Substanz in einen zuvor geglühten Porzellantiegel mit Tiegeldeckel auf 0.1 mg genau eingewogen und 2 Stunden bei 1000 °C in einem Muffelofen geglüht. Ein Verstauben ist sorgfältig zu vermeiden. Als günstig hat es sich erwiesen, wenn die eingewogenen Proben in den noch kalten Muffelofen gestellt werden.
Durch das langsame Aufheizen des Ofens werden stärkere Luftturbulenzen in den Porzellantiegeln vermieden.
Nach Erreichen von 1000 °C wird noch 2 Stunden weitergeglüht. Anschließend wird mit einem Tiegeldeckel abgedeckt und der Tiegel im Exsikkator über Blaugel der Gewichtsverlust ermittelt.

Auswertung der Glühverlustbestimmung

Da der Glühverlust auf die 2 h bei 105 °C getrocknete Probe bezogen wird, ergibt sich folgende Berechnungsformel:

$$\% \text{ Glühverlust} = \frac{m_0 \times \frac{100 - TV}{100} - m_1}{m_0 \times \frac{100 - TV}{100}} \times 100$$

$m_0$ = Einwaage (g)
TV = Trocknungsverlust (%)
$m_1$ = Gewicht der geglühten Probe (g)

Das Ergebnis wird mit einer Dezimale ausgewiesen.

**DBP-Zahl**

Geräte zur DBP-Zahlbestimmung

Oberschalige Waage
Polybecher (250 ml)
Brabender Plastograph mit Dosier-Einheit

Reagenz

Dibutylphtalat (techn.)

Durchführung

1. Überprüfung des Abschaltpunktes

- Plastograph ohne Dosierpumpe einschalten.
- Schutzklappe für Bedienungsteil öffnen (unter dem Display)
- "Func" - Taste drücken, die Anzeige zeigt abwechselnd den Abschaltwert "1000" und den Alarm "AI H.A." an, nach 5 sec. erscheint die Anzeige wieder im Normal- modus.

2. Kalibrierung

- Plastograph ohne Dosierpumpe einschalten.
- Kneter einschalten (beide Starttasten gleichzeitig drücken).
- bei gedrückter "Cal"-Taste einmal die "Funk"-Taste drücken, die Anzeige zeigt abwechselnd den aktuellen Nullpunkt und "Lo S.C." an.
- nochmals die "Cal"-Taste drücken, nach vier Sekunden (Kalibrierung), zeigt das Gerät den aktuellen Gesamtbereich "10000" und "Fu S.C." an.
- nochmals die "Cal"-Taste drücken, nach vier Sekunden (Kalibrierung), zeigt das Gerät den reibungskorrigierten Nullpunkt "tare" an.
- nochmals die "Cal"-Taste drücken und 5 sec. warten.
- Arbeitsschritte "Abschaltpunkt" und "Kalibriervorgang" bei Bedarf einmal täglich vor den Messungen durchführen

3. Messung

- 12,5 g Probe werden in einen Polybecher eingewogen und in die Knetkammer gegeben. Auf Anweisung kann die Einwaage auch hiervon abweichen (z.B. 8 oder 20 g).Die DBP-Dosier-Einheit wird einschaltet. Sobald der Füllvorgang (Anzeige F) abgeschlossen ist, ist der Plastograph betriebsberei.
- Durch gleichzeitiges Drücken der Start-Tasten beginnt die Messung.
- Die Dosier-Einheit dosiert 4ml DBP/min bis der eingestellte Abschaltpunkt (1000) erreicht ist.
- Das Gerät schaltet automatisch ab.
- An der Anzeige der Dosier-Einheit kann nun der Verbrauch an DBP abgelesen werden.

Berechnung

$$\text{DBP (\%)} = \frac{\text{Anzeige Dosimat} \times 1.047 \times 100}{\text{Einwaage (g)}}$$

Ergebnis immer mit Einwaage angeben.

**Verwendung der erfindungsgemäßen Kieselsäure in Lacken.**

Die erfindungsgemäßen Kieselsäuren gemäß den Beispielen 1 bis 7 werden in verschiedenen Lacksystemen geprüft. Die Ergebnisse dieser Prüfungen sind in den Tabellen 5 bis 8 aufgeführt.
Die Tabelle 5 zeigt die Wirkung der erfindungsgemäßen Kieselsäuren gemäß den Beispielen 1 bis 7, die in dem schwarzen Einbrennlack DUPLEX D 1326 eingesetzt und mit dem Mattierungsmittel gemäß DE 24 14 478 verglichen werden.
Bei dem Einbrennlack DUPLEX 1326 handelt es sich um ein Handelsprodukt der DuPont Coatings, Austria. Die Bindemittelbasis ist Alkyd-/Melaminharz. Charakteristik: schwarz pigmentierter Alkyl-/Melaminharz-Einbrennlack, hochglänzend, Ursprüngliche Verwendung: KFZ(LKW)-Serienlack. Er wird als Standardprüfsystem, vor allem zur Prüfung des Grindometerwertes und der Mattierungseffizienz eingesetzt.
Dient als Modell für pigmentierte Industrielacke mit mittlerer Mattierbarkeit. Über die Variation der Einwaage wurde für alle Produkte ein gleiches Glanzniveau (60°-Reflektormeterwert) eingestellt.
Die Ergebnisse sind wie folgt:
Aus den Tabellenwerten ist ersichtlich, daß trotz Coatung und niedriger Grindometerwerte (Partikelgröße) keine Beeinträchtigung der hohen Mattierungswirkung festgestellt wird.
Die Tabelle 6 zeigt die Wirkung der erfindungsgemäßen Kieselsäuren gemäß den Beispielen 1 bis 7, die in einem NC-Prüflack für Schwebetests eingesetzt und mit dem Mattierungsmittel gemäß DE 24 14 478 verglichen wird. Der NC-Prüflack dient ausschließlich der Prüfung des Sedimentationsverhaltens von Mattiermitteln. Es ist wie folgt zusammengesetzt.

| Rohstoff | Gehalt | Menge |
|---|---|---|
| Toluol | | 15,00 |
| Butanol | | 10,00 |
| Ethylacetat | | 10,00 |
| Butylacetat 85 | | 10,00 |
| NC-Chips E 510 82/18 DBP | | 12,00 |
| Dibutylphtalat | | 1,00 |
| Rizinusöl 18 P geblasen | | 2,00 |
| Jägalyd E 42 | 60,00 % in Xylol | 10,00 |
| Alresat KM 31 | 50,00 % in Ethylacetat/Butylacetat 85% 1:1 | 20,00 |
| Benzin 100/140 | | 10,00 |
| **Gesamt** | | **100,00** |

Die Ergebnisse sind wie folgt:
Nahezu all gecoateten Proben weisen ein deutlich verbessertes Schwebeverhalten auf. Zum Teil ist keine Sedimentation zu beobachten (Beispiele 3 und 4).
Die Tabelle 7 zeigt die Wirkung der erfindungsgemäßen Kieselsäuren gemäß den Beispielen 1 bis 7, die in dem DD-Blauschleierlack P eingesetzt und mit dem Mattierungsmittel gemäß DE 24 14 478 verglichen wird. Der Blauschleierlack ist ein 2-Komponenten-Polyurethanlack der vor allem zur Prüfung der Mattierungseffizienz eingesetzt wird. Er dient als Modell für unpigmentierte Holz- und Möbellacke mit schwerer Mattierbarkeit. Über die Einhaltung gleicher

EP 1 431 338 B1

Einwaagen für alle Produkte wird der direkte Einfluss der Mattierungsmittel auf den Glanzgrad (Reflektormeterwert) dargestellt.

Der Blauschleierlack ist wie folgt zusammengesetzt:

| Rohstoff | Gehalt | Menge |
|---|---|---|
| Buylacetat 98 % | | 8,30 |
| Ethoxypropylacetat | | 16,50 |
| Desmophen 800 | | 115,00 |
| Desmophen 1100 | | 20,00 |
| CAB 381-0.5 | 10,00 % in Butylacetat 98 % | 3,00 |
| Mowilith 20 | 50,00 % in Ethylacetat | 3,00 |
| Baysilone OL | 10,00 in Xylol | 0,10 |
| BYK 361 | | 0,30 |
| Xylol | | 33,80 |
| **Gesamt** | | **100,00** |

Die Ergebnisse sind wie folgt:

Alle Porben weisen eine geringere Thixotropie beziehungsweise nur eine geringe oder keine rheologische Beeinflussung des Lacksystems auf. Dies wirkt sich vorteilhaft auf die Lackverarbeitungseigenschaften auf.

Die Tabelle 8 zeigt die Wirkung der erfindungsgemäßen Kieselsäuren gemäß den Beispielen 1 bis 7 in dem standardisierten Wachsablösetest. Dieser Test dient zur Überprüfung, ob das zu Verhinderung der Sedimentation aufgebrachte Coatungsmittel in Lacken vollständig auf der Kieselsäure verbleibt, und sich nicht ablösen lässt. Hierzu werden die gecoateten Kieselsäuren einer Lagerung in Ethoxypropylacetat bei erhöhter Temperatur unterzogen. Besteht ein Produkt diesen Test, kann mit hoher Wahrscheinlichkeit vorausgesagt werden, daß dies auch für alle Lacksysteme gilt. Das Ergebnis ist, daß an keiner dieser Kieselsäuren eine Ablösung des Coatungsmittels festgestellt werden kann.

Tabelle 5

| Dispergierung: 10 min Flügelrührer, ⌀ 45 mm 2000 U/min PE-Becher 350 ml | A | B | C | D | E | F | G | H | I | J |
|---|---|---|---|---|---|---|---|---|---|---|
| Einbrennlack schwarz DUBLEX D 1326 g | 100 | 100 | 100 | 100 | 100 | 100 | 100 | 100 | 100 | 100 |
| Verdünnung V 0003 g | 20 | 20 | 20 | 20 | 20 | 20 | 20 | 20 | 20 | 20 |
| ACEMATT TS 100 g | 2,4 | | | | | | | | | |
| Beispiel 1 g | | 2,6 | | | | | | | | |
| Beispiel 2 g | | | 2,6 | | | | | | | |
| Beispiel 3 g | | | | 2,7 | | | | | | |
| Beispiel 4 g | | | | | 2,9 | | | | | |
| Beispiel 5 g | | | | | | 2,7 | | | | |
| Beispiel 6 g | | | | | | | 3,4 | | | |
| Beispiel 7 g | | | | | | | | 2,4 | | |

17

(fortgesetzt)

| Dispergierung: 10 min Flügelrührer, ⌀ 45 mm 2000 U/min PE-Becher 350 ml | A | B | C | D | E | F | G | H | I | J |
|---|---|---|---|---|---|---|---|---|---|---|
| ACEMATT OK 500 g | | | | | | | | | 3,8 | |
| ACEMATT OK 520 g | | | | | | | | | | 4,1 |
| Auslaufzeit DIN-Becher 4 mm s | 30 | 32 | 30 | 33 | 34 | 34 | 30 | | 26 | 31 |
| Grindometerwert μm | 42 | 40 | 40 | 39 | 38 | 40 | 40 | | 26 | 28 |
| Stippen bis μm | unsauber | - | - | - | - | - | - | - | - | - |
| Applikation m. Aufziehgerät Erichsen 509 MC auf Glasscheiben, Aufziehgeschw. 25 mm/s, Spaltrakel 120 μm, Ablüftzeit: 10-20 min, Einbrennbedingungen: 20 min 150 °C | | | | | | | | | | |
| Lufttemperatur während Ablüften °C | 23 | 23 | 23 | 23 | 23 | 23 | 23 | 23 | 23 | 23 |
| Relative Luftfeuchte während Ablüften % | 70 | 70 | 70 | 70 | 70 | 70 | 70 | 70 | 70 | 70 |
| Schichtdicke μm | 24 | 24 | 24 | 24 | 24 | 24 | 24 | 24 | 24 | 24 |
| 60°-Reflektometerwert | 36,6 | 35,4 | 37,4 | 37,5 | 35,2 | 37,2 | 36,7 | 37,9 | 35,5 | 35,7 |
| 85°-Reflektometerwert | 71,7 | 71,8 | 74,1 | 71,6 | 69,1 | 69,4 | 72,0 | 72,1 | 83,6 | 83,6 |
| Δ85°-60° Reflektometerwert | 35,1 | 36,4 | 36,7 | 34,1 | 33,9 | 32,2 | 35,3 | 34,2 | 48,1 | 47,9 |

Tabelle 6

| Dispergierung: 10 min Flügelrührer, ⌀ 45 mm 2000 U/min PE-Becher 350 ml | A | B | C | D | E | F | G | H |
|---|---|---|---|---|---|---|---|---|
| **NC-Prüflack für Schwebetest g** | 40,0 | 40,0 | 40,0 | 40,0 | 40,0 | 40,0 | 40,0 | 40,0 |
| ACEMATT TS 100 g | 0,4 | | | | | | | |
| Beispiel 1 g | | 0,4 | | | | | | |
| Beispiel 2 g | | | 0,4 | | | | | |
| Beispiel 3 g | | | | 0,4 | | | | |
| Beispiel 4 g | | | | | 0,4 | | | |
| Beispiel 5 g | | | | | | 0,4 | | |
| Beispiel 6 g | | | | | | | 0,4 | |
| Beispiel 7 g | | | | | | | | 0,4 |

(fortgesetzt)

| Dispergierung: 10 min Flügelrührer, ∅ 45 mm 2000 U/min PE-Becher 350 ml | A | B | C | D | E | F | G | H |
|---|---|---|---|---|---|---|---|---|
| g | 40,4 | 40,4 | 40,4 | 40,4 | 40,4 | 40,4 | 40,4 | 40,4 |
| | | | | | | | | |
| **Beschaffenheit des Bodensatzes (Skala 1-5)** | | | | | | | | |
| 1 = keine Trennung von Lack und MM | | | | X | X | | | |
| 2 = lockerer Bodensatz | | X | X | | | | X | X |
| 3 = weicher Bodensatz | | | | | | | | |
| 4 = weicher Bodensatz/schwer aufrührbar | | | | | | X | | |
| 5 = fester Bodensatz | X | | | | | | | |
| **Prüfung des Schwebeverhaltens** | | | | | | | | |
| 10 Tage Trockenschrank (+50°) | | | | | | | | |
| 14 Std. Zentrifuge Jouan CT 4.22 | X | X | X | X | X | X | X | X |

Tabelle 7

| Dispergierung: 10 min Flügelrührer, ∅ 45 mm 2000 U/min PE-Becher 350 ml | A | B | C | D | E | F | G | H |
|---|---|---|---|---|---|---|---|---|
| **DD-Blauschleier-Lack g** | 100 | 100 | 100 | 100 | 100 | 100 | 100 | |
| ACEMATT TS 100 g | 4,4 | | | | | | | |
| Beispiel 1 g | | 4,4 | | | | | | |
| Beispiel 2 g | | | 4,4 | | | | | |
| Beispiel 3 g | | | | 4,4 | | | | |
| Beispiel 4 g | | | | | 4,4 | | | |
| Beispiel 5 g | | | | | | 4,4 | | |
| Beispiel 6 g | | | | | | | 4,4 | |
| Beispiel 7 g | | | | | | | | |
| | | | | | | | | |
| Auslaufzeit Zahn - Becher 4 mm s | ca 24 | ca 20 | ca 19 | 14 | 13 | 18 | 11 | |
| Zugabe von Desmodur L 75 K g | 50 | 50 | 50 | 50 | 50 | 50 | 50 | |
| Auslaufzeit Zahn - Becher 4 mm s | 16 | 16 | 15 | 13 | 13 | 16 | 12 | |
| Rakelapplikation auf schwarze Scheiben, Spaltrakel 150 µm, Coatmaster 509 MC, 25 mm/s, Ablüftzeit: 25-30 min, forciere Trocknung 120 min 50 °C | | | | | | | | |

(fortgesetzt)

| Dispergierung: 10 min Flügelrührer, ⌀ 45 mm 2000 U/min PE-Becher 350 ml | A | B | C | D | E | F | G | H |
|---|---|---|---|---|---|---|---|---|
| Temperatur während Applikation °C | 22 | 22 | 22 | 22 | 22 | 22 | 22 | |
| Rel. Luftfeuchte während Applikation % | 55 | 55 | 55 | 55 | 55 | 55 | 55 | |
| Schichtdicke μm | | | | | | | | |
| 60° -Reflektometerwert | 16,5 | 21,5 | 28,0 | 25,4 | 30,0 | 25,3 | 83,6 | |
| 85° -Reflektometerwert | 41,7 | 50,3 | 56,7 | 55,5 | 62,1 | 57,0 | 91,3 | |
| Δ85°-60° Reflektometerwert | 25,2 | 28,8 | 28,7 | 30,1 | 32,1 | 31,7 | 7,7 | |
| Density mit Gelbfilter über schwarzer Fläche | | | | | | | | |

Tabelle 8

| Einwaage Lösungsmittel: 35 g Ethoxypropylacetat Einwaage Mattierungsmittel: 1g Einarbeitung von Hand Lagerung über Nacht bei 50 °C im Trockenschrank | | | |
|---|---|---|---|
| Probe-Nr. | Bezeichnung der Probe | Wachs ablösung | Bemerkungen |
| A | ACEMATT TS 100 | Nein | ungecoateter Standard |
| B | Beispiel 1 | Nein | |
| C | Beispiel 2 | Nein | |
| D | Beispiel 3 | Nein | |
| E | Beispiel 4 | Nein | |
| F | Beispiel 5 | Nein | |
| G | Beispiel 6 | Nein | |
| H | Beispiel 7 | Nein | |

**Patentansprüche**

1. Verfahren zur Herstellung von strukturgecoateten Kieselsäuren, **dadurch gekennzeichnet, dass** eine pyrogene Kieselsäure in einem geeigneten Mischgefäß mit Wasser und zumindest einem Coatungsmittel gemischt, anschließend vermahlen und danach getrocknet wird, wobei der pH-Wert der Reaktionsmischung auf 7 bis 14 eingestellt wird.

2. Verfahren nach Anspruch 1, **dadurch gekennzeichnet, dass** zumindest eine Substanz, ausgewählt aus der Gruppe, die aus alkalischen Substanzen, freier Kieselsäure, hydrolytischer Kieselsäure und Alkali freisetzenden Substanzen besteht, in der Reaktionsmischung zugegen ist.

3. Verfahren nach einem der Ansprüche 1 oder 2, **dadurch gekennzeichnet, dass** die alkalischen Substanzen ausgewählt sind aus der Gruppe, die aus Ammoniak, Natrium-, Kaliumhydroxid, wasserlöslichen Aminen und Wasserglas besteht.

4. Strukturgecoatete Kieselsäure erhältlich nach einem Verfahren gemäß einem der Ansprüche 1 bis 3.

5. Strukturgecoatete Kieselsäure nach Anspruch 4, **dadurch gekennzeichnet, dass** der Kohlenstoffgehalt 10 bis 30 Gew. % beträgt.

6. Strukturgecoatete Kieselsäure nach Anspruch 4 oder 5, **dadurch gekennzeichnet, dass** sie eine BET-Oberfläche von 80 bis 450 $m^2$/g aufweist.

7. Strukturgecoatete Kieselsäure nach einem der Ansprüche 4 bis 6, **dadurch gekennzeichnet, dass** sie eine Stampfdichte von 10 bis 100 g/l aufweist.

8. Strukturgecoatete Kieselsäure nach einem der Ansprüche 4 bis 7, **dadurch gekennzeichnet, dass** sie eine DBP Zahl von 2.4 bis 3.8 aufweist.

9. Verwendung einer strukturgecoateten Kieselsäure nach einem der Ansprüche 4 bis 8 als Mattierungsmittel in Lacken.

10. Lack und/oder Lacksystem, **dadurch gekennzeichnet, dass** eine strukturgecoatete Kieselsäure nach einem der Ansprüche 4 bis 8 enthalten ist.


**Claims**

1. Process for preparing texture-coated silicas, **characterized in that** a fumed silica is mixed with water and at least one coating agent in a suitable mixing vessel, then ground and subsequently dried, whereupon the pH of the reaction mixture being adjusted to 7 - 14.

2. Process according to Claim 1, **characterized in that** at least one substance selected from the group consisting of alkaline substances, free silica, hydrolytic silica and alkali-releasing substances is present in the reaction mixture.

3. Process according to either of Claims 1 and 2, **characterized in that** the alkaline substances are selected from the group consisting of ammonia, sodium hydroxide, potassium hydroxide, watersoluble amines and water glass.

4. Texture-coated silica obtainable by a process according to any one of Claims 1 to 3.

5. Texture-coated silica according to Claim 4, **characterized in that** the carbon content is 10% to 30% by weight.

6. Texture-coated silica according to Claim 4 or 5, **characterized in that** it has a BET surface area of 80 to 450 $m^2$/g

7. Texture-coated silica according to any one of Claims 4 to 6, **characterized in that** it has a tamped density of 10 to 100 g/l.

8. Texture-coated silica according to any one of Claims 4 to 7, **characterized in that** it has a DBP number of 2.4 to 3.8.

9. Use of a texture-coated silica according to any one of Claims 4 to 8 as a delustering agent in lacquers.

10. Lacquer and/or lacquer system, **characterized in that** a texture-coated silica according to any one of Claims 4 to 8 is included.


**Revendications**

1. Procédé pour la préparation de silices revêtues structurées, **caractérisé en ce qu'**on mélange une silice pyrogène dans un récipient de mélange approprié avec de l'eau et au moins un agent de revêtement, puis on broie et on sèche, le pH du mélange réactionnel étant réglé à 7 jusqu'à 14.

**2.** Procédé selon la revendication 1, **caractérisé en ce qu'**au moins une substance, choisie dans le groupe constitué par les substances alcalines, la silice libre, la silice hydrolytique et les substances libérant des alcalis, est présente dans le mélange réactionnel.

**3.** Procédé selon l'une quelconque des revendications 1 ou 2, **caractérisé en ce que** les substances alcalines sont choisies dans le groupe constitué par l'ammoniac, l'hydroxyde de sodium, l'hydroxyde de potassium, les amines solubles dans l'eau et le verre soluble.

**4.** Silice revêtue structurée, pouvant être obtenue selon un procédé selon l'une quelconque des revendications 1 à 3.

**5.** Silice revêtue structurée selon la revendication 4, **caractérisée en ce que** la teneur en carbone est de 10 à 30% en poids.

**6.** Silice revêtue structurée selon la revendication 4 ou 5, **caractérisée en ce qu'**elle présente une surface BET de 80 à 450 m$^2$/g.

**7.** Silice revêtue structurée selon l'une quelconque des revendications 4 à 6, **caractérisée en ce qu'**elle présente une densité tassée de 10 à 100 g/l.

**8.** Silice revêtue structurée selon l'une quelconque des revendications 4 à 7, **caractérisée en ce qu'**elle présente un indice DBP de 2,4 à 3,8.

**9.** Utilisation d'une silice revêtue structurée selon l'une quelconque des revendications 4 à 8 comme agent de matage dans les laques.

**10.** Laque et/ou système de laque, **caractérisé(e) en ce qu'**une silice revêtue structurée selon l'une quelconque des revendications 4 à 8 est contenue.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2414478
- DE 1592863

- EP 0341383 A2

**In der Beschreibung aufgeführte Nicht-Patentliteratur**

- Ullmann's Encyklopädie der technischen Chemie. 1982, vol. 21, 464 ff